# EUROPÄISCHE PATENTSCHRIFT

(11) **EP 0 971 160 B1**
(45) Veröffentlichungstag und Bekanntmachung des Hinweises auf die Patenterteilung: **13.04.2005**
(21) Anmeldenummer: 99810495.4
(22) Anmeldetag: 07.06.1999
(51) Int. Cl.: F16K 3/08, F04B 39/08

(54) **Aktiv gesteuertes Ventil für einen Kolbenkompressor**
Actuated valve for piston compressor
Robinet-vanne commandé pour un compresseur à piston

(30) Priorität: 07.07.1998 EP 98810640
(43) Veröffentlichungstag der Anmeldung: 12.01.2000
(73) Patentinhaber: Burckhardt Compression AG, 8404 Winterthur (CH)
(72) Erfinder: Steinebrunner, Cyrill, 8406 Winterthur (CH); Kläui, Erich, 8472 Seuzach (CH)
(74) Vertreter: Dr. Graf & Partner

(56) Entgegenhaltungen:
- WO-A-97/13068
- US-A- 5 342 025
- US-A- 5 345 968
- US-A- 5 417 083
- "REMOTELY-CONTROLLED VARIABLE-ORIFICE VALVE" NTIS TECH NOTES, 1. Oktober 1990 (1990-10-01), Seite 863 XP000170857

## Beschreibung

Die Erfindung betrifft ein aktiv gesteuertes Ventil für einen Kolbenkompressor gemäss dem Oberbegriff des unabhängigen Patentanspruchs 1. Die Erfindung betrifft weiter ein Verfahren zum fremdgesteuerten Betätigen eines Kolbenkompressorventits durch einen eigenen Antriebsmechanismus gemäss dem Oberbegriff vom unabhängigen Patentanspruch 18.

Die Saug- und Druckventile von Kolbenkompressoren sind heute meistens als federbelastete, eigenmediumbetätigte Ventile, beispielsweise als Plattenventile, ausgestaltet. Ein solches Plattenventil umfasst typischerweise einen plattenförmigen Ventilsitz, eine Ventilplatte und einen plattenförmigen Ventilfänger, die in axialer Richtung des Ventils gesehen hintereinander angeordnet sind und von einer Zentralschraube zusammengehalten werden. Dabei ist die Ventilplatte zwischen dem Ventilsitz und dem Ventilfänger angeordnet und wird durch zwischen Ventilfänger und Ventilplatte wirkende Federn gegen den Ventilsitz vorgespannt, sodass sie die Durchlässe im Ventilsitz dichtend verschliesst. Bei einem vorgebbaren Öffnungsdruck des Eigenmediums wird die Ventilplatte gegen die Kraft der Federn in axialer Richtung vom Ventilsitz abgehoben und gibt den Durchgang für das Medium frei. Unterschreitet der Druck des Eigenmediums den Schliessdruck, so pressen die Federn die Ventilplatte wieder gegen den Ventilsitz und das Ventil schliesst.

Solche Ventile werden also passiv betätigt, das heisst, die Bewegung der Ventilplatte oder ähnlicher Ventilkörper resultiert im wesentlichen aus dem Verhältnis der Kräfte, die durch das Eigenmedium, die Federn und die Massen verursacht werden. Eines der Hauptprobleme derartiger Ventile ist ihre unbefriedigende Ventilkinematik. Sie öffnen und schliessen langsam; der Öffnungs- bzw. Schliesszeitpunkt bezogen auf den Arbeitszyklus des Kolbenkompressors lässt sich nur ungenau und nicht optimal einstellen. Werden beispielsweise relativ schwache Federn verwendet, so ist der Hub der Ventilplatte zwar genügend gross, um einen ausreichenden Durchströmungsquerschnitt des Ventils zu realisieren, aber das Ventil schliesst in der Regel zu spät oder zu langsam. Wählt man dagegen stärkere Federn, so schliesst das Ventil zwar schneller, aber der Hub der Ventilplatte ist deutlich geringer, woraus eine nachteilige Reduzierung des Durchströmungsquerschnitts resultiert.

Auch neigen solche Ventile zu strömungserregten Schwingungen, die auch als aeroelastisches Flattern bezeichnet werden. Zudem prellt die Ventilplatte häufig am Endanschlag zurück. Diese unkontrollierten Aufprallbewegungen führen zu Materialermüdungen und Beschädigungen, wodurch sich die Lebensdauer des Ventils bzw. des Kompressors deutlich reduziert. Dies ist unter wirtschaftlichen Aspekten ein erheblicher Nachteil.

Auch sind vom Stand der Technik aktive Ventile, z. B. Pilzventile bei Automotoren, bekannt, das heisst, solche Ventile, die durch einen eigenen Antriebsmechanismus fremdgesteuert betätigt werden. Die Betätigung solcher aktiven Ventile erfolgt beispielsweise über einen Nockenantrieb und entsprechend ausgestaltete Übertragungsgestänge, welche die Hubbewegung der Ventilplatte relativ zum Ventilsitz steuern. Aktiv gesteuerte Plattenventile haben den Vorteil, dass dem strömenden Medium keine Energie zum Betätigen des Ventils entzogen werden muss. Zudem können derartige Ventile schneller öffnen und schliessen und der Öffnungs- bzw. Schliesszeitpunkt lässt sich in der Regel genauer einstellen als bei passiven Ventilen. Aber auch bei den bekannten aktiven Ventilen besteht das Problem des Prellens der Ventilplatte und des daraus resultierenden Materialverschleisses.

Insbesondere bei der Entwicklung moderner Kolbenkompressoren mit hoher Leistungsfähigkeit, bei denen häufig grössere Arbeitsgeschwindigkeiten und höhere Differenzdrücke angestrebt werden, wird dieses Problem immer gravierender.

Die Druckschrift "REMOTELY-CONTROLLED VARIABLE-ORIFICE VALVE", NTIS TECH NOTES, 1. Oktober 1990, Seite 863, XP000170857 und die Druckschrift US 5,417,083 offenbaren Ventile, deren Durchflussflächen mit Hilfe eines Aktuators veränderbar sind, um den Druckabfall einzustellen. Für Kolbenkompressoren besteht kein Bedarf nach Ventilen, welche einen einstellbaren Druckabfall ermöglichen. Es sind Ventile erforderlich, welche nur eine Offenstellung sowie eine Schliessstellung aufweisen, um den Fluidstrom zuzulassen oder zu verhindern. Da bei den bekannten Ventilen ein vorgebbarer Drehwinkel einstellbar ist, um derart eine vorgebbare Durchflussfläche einzustellen, sind diese Ventil zudem nur sehr langsam ansteuerbar und daher für den Betrieb mit einem Kolbenkompressor nicht geeignet.

Die Druckschrift US 5,345,698 offenbart ein Ventil, welches eine erste Stellung aufweist, in welcher ein Fluidstrom ermöglicht wird, und welches eine zweite Stellung aufweist, in welcher ein Fluidstrom verhindert wird. Dieses Ventil weist einen erhebliche Verschleiss auf und ist zudem für grosse Massenströme nicht geeignet.

Ausgehend von diesem Stand der Technik ist es daher eine Aufgabe der Erfindung, ein aktiv gesteuertes Ventil für einen Kolbenkompressor vorzuschlagen, das eine verbesserte Ventilkinematik aufweist. Insbesondere soll das Aufprellen der Ventilplatte weitestgehend vermieden werden.

Das diese Aufgaben lösende aktiv gesteuerte Ventil ist durch die Merkmale des unabhängigen Anspruchs 1 gekennzeichnet.

Erfindungsgemäss wird also ein aktiv gesteuertes Ventil für einen Kolbenkompressor vorgeschlagen, das eine Ventilplatte und eine Gegenplatte umfasst, welche beide Durchlassöffnungen aufweisen, wobei die Ventilplatte derart gelagert ist, dass sie um die Längsachse des Ventils und relativ zur Gegenplatte drehbar ist, und wobei das Ventil ein Mittel aufweist, um die Ventilplatte, in Längsachse des Ventiles zu bewegen. Das Ventil umfasst ferner eine Antriebsvorrichtung, die mit der Ventilplatte verbunden ist, um die Ventilplatte relativ zur Gegenplatte zu drehen.

Die Aufgabe wird weiter gelöst mit einem Verfahren zum aktiven Ansteuern eines Kolbenkompressorventils aufweisend die Merkmale von Anspruch 18.

In der Schliessstellung des erfindungsgemässen Ventils sind die Ventilplatte und die Gegenplatte relativ zueinander derart orientiert, dass die Durchlassöffnungen in der Gegenplatte durch die Ventilplatte verschlossen werden. Zum Öffnen des Ventils wird die Ventilplatte um einen vorgegebenen Winkel relativ zur Gegenplatte und um die Längsachse des Ventils gedreht, sodass die Durchlassöffnungen in der Ventilplatte über die Durchlassöffnungen in der Gegenplatte zu liegen kommen. Auf diese Weise entsteht ein durchgängiger Strömungsquerschnitt für das Medium, das heisst, das Ventil ist in seiner Offenstellung. Zum Schliessen des Ventils wird die Ventilplatte ebenfalls um einen vorgegebenen Winkel um die Längsachse des Ventils gedreht, sodass sie die Durchlassöffnungen in der Gegenplatte dichtend verschliesst.

Das Öffnen bzw. Schliessen des Ventils erfolgt also jeweils durch eine Rotation der Ventilplatte relativ zur Grundplatte, um die in den beiden Platten jeweils vorgesehenen Durchlassöffnungen zur Deckung zu bringen (Offenstellung) bzw. in eine solche gegenseitige Lage, dass keine durchgängige Strömungsverbindung existiert (Schliessstellung). Durch diese Massnahme wird das Problem des Prellens der Ventilplatte, wie es bei bekannten Ventilen auftritt, vermieden. Auch das bekannte Problem des aeroelastischen Flatterns tritt bei dem erfindungsgemässen Ventil nicht mehr auf.

Im Hinblick auf eine gute Ventilkinematik und insbesondere auf einen möglichst optimal einstellbaren Öffnungs- bzw. Schliesszeitpunkt ist die Antriebsvorrichtung vorzugsweise ein elektrischer Antrieb mit einem Stator und einem Läufer, wobei der Läufer drehfest mit der Ventilplatte verbunden ist. Dieser Antrieb stellt eine einfache Möglichkeit dar, die Winkellage der Ventilplatte relativ zur Gegenplatte schnell und mit ausreichender Präzision zu steuern.

Um ein noch schnelleres Öffnen bzw. Schliessen des Ventils zu ermöglichen, ist der Läufer bevorzugt als massenarmer Läufer, insbesondere als rohrförmiger Läufer, ausgestaltet. Dadurch sind die bei der Betätigung des Ventils bewegten Massen klein, sodass nur vergleichsweise geringe Trägheitskräfte auftreten.

Erfindungsgemäß sind an dem Ventil Mittel vorgesehen, um die Ventilplatte relativ zur Gegenplatte in axialer Richtung zu bewegen. Zum Öffnen und Schliessen des Ventils führt die Ventilplatte eine kombinierte Hub-Dreh-Bewegung aus. Dabei ist die Amplitude der Hubbewegung vergleichsweise gering, zum Beispiel etwa nur 0.1 mm. Durch diese geringfügige Bewegung in axialer Richtung beim Betätigen des Ventils kann die Ventilplatte im wesentlichen reibungsfrei relativ zur Gegenplatte verdreht werden. Dadurch tritt praktisch kein Verschleiss von Ventil- und Gegenplatte auf, sodass eine sehr lange Lebensdauer des Ventils gewährleistet ist.

Die Mittel zum Bewegen der Ventilplatte in axialer Richtung können einen Hubmagneten umfassen, der so angeordnet ist, dass er eine axial gerichtete Kraft auf die Ventilplatte und/oder den Läufer ausüben kann. Auch ist es möglich, den elektrischen Antrieb so auszugestalten , dass er eine axial gerichtete Kraft auf die Ventilplatte ausüben kann.

Vorteilhafterweise sind die Gegenplatte, die Ventilplatte und der Läufer entlang eines sich in axialer Richtung erstreckenden Trägerelements angeordnet, wobei die Lagerung der Ventilplatte und des Läufers bezüglich des Trägerelements verschleissfrei, insbesondere reibungsfrei, ausgestaltet ist. Durch diese verschleissfreie Lagerung der drehbaren Ventilkomponenten, nämlich des Läufers und der Ventilplatte, lässt sich die Lebensdauer des Ventils noch weiter erhöhen, weil praktisch keine Abnutzung durch aneinander gleitende Teile vorhanden ist.

In einer bevorzugten Ausgestaltung ist diese verschleissfreie Lagerung dadurch realisiert, dass die Ventilplatte und der Läufer mittels Biegefedern mit dem Trägerelement verbunden sind. Die Biegefedern erstrecken sich in radialer Richtung zwischen dem Trägerelement einerseits und der Ventilplatte bzw. dem Läufer andererseits. Beim Betätigen des Ventils, das heisst beim Drehen der Ventilplatte, werden die Biegefedern elastisch deformiert. Durch die Biegefedern ist die Ventilplatte bzw. der Läufer auch bezüglich der axialen Richtung beweglich und verschleissfrei gelagert, sodass die gegebenenfalls zusätzlich vorhandene geringfügige Hubbewegung der Ventilplatte in axialer Richtung ebenfalls möglich ist. Diese Ausbildung, bei der die Ventilplatte mittels Biegefedern drehbar und axial beweglich gelagert ist, hat den zusätzlichen Vorteil, dass die Lagerung der Ventilplatte auch spielfrei ist, sodass eine zuverlässige Ventilfunktion gewährleistet ist.

Ferner ist es auch möglich, den Läufer magnetisch und berührungsfrei bezüglich des Trägerelements zu lagern.

Weitere vorteilhafte Massnahmen und bevorzugte Ausgestaltungen der Erfindung ergeben sich aus den abhängigen Ansprüchen.

Im folgenden wird die Erfindung anhand der Zeichnung und anhand eines Ausführungsbeispiels näher erläutert. In der schematischen nicht massstäblichen Zeichnung zeigen:
- Fig. 1:: eine Längsschnittdarstellung eines Ausführungsbeispiels des erfindungsgemässen Ventils mit den wesentlichen Teilen,
- Fig. 2:: einen Querschnitt durch das Ausführungsbeispiel entlang der Schnittlinie II-II in Fig. 1, und
- Fig. 3:: eine Aufsicht auf die Ventilplatte des Ausführungsbeispiels.

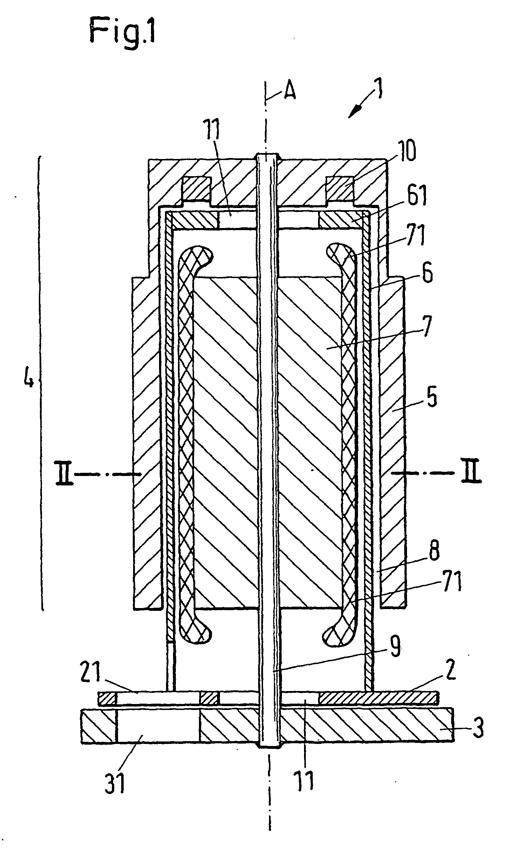

Fig. 1 zeigt in einer Längsschnittdarstellung die wesentlichen Teile eines Ausführungsbeispiels des aktiv gesteuerten Ventils gemäss der Erfindung, das gesamthaft mit dem Bezugszeichen 1 bezeichnet ist. Das Ventil 1 ist in einem nicht dargestellten Ventilgehäuse untergebracht. Das in Fig. 1 dargestellte Ausführungsbeispiel ist als Druckventil für einen Kolbenkompressor ausgestaltet. Es versteht sich, dass das erfindungsgemässe, aktiv gesteuerte Ventil 1 in sinngemäss gleicher Weise auch als Saugventil ausgestaltet sein kann.

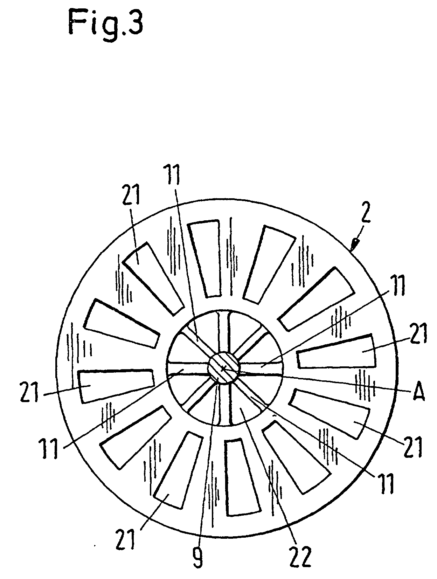

Das aktive Ventil 1 umfasst eine Ventilplatte 2, die in Fig. 3 in einer Aufsicht dargestellt ist, sowie eine Gegenplatte 3. Sowohl in der Ventilplatte 2 als auch in der Gegenplatte 3 sind jeweils mehrere Durchlassöffnungen 21 bzw. 31 vorgesehen, die vorzugsweise jeweils als radial verlaufende Schlitze ausgebildet sind, die in Umfangsrichtung gesehen äquidistant über die Ventilplatte 2 bzw. die Gegenplatte 3 verteilt sind wie dies Fig. 3 zeigt. Die Abmessungen der Schlitze und ihr gegenseitiger Abstand sind dabei auf der Ventilplatte 2 gleich wie auf der Gegenplatte 3.

Die Gegenplatte 3 ist starr mit einem stabförmigen Trägerelement 9 verbunden, das sich in axialer Richtung, womit die Richtung der Längsachse A des Ventils 1 gemeint ist, erstreckt. Im normalen Betriebszustand ist dieses Trägerelement 9 und damit auch die Gegenplatte 3 ortsfest bezüglich des Kompressorgehäuses angeordnet. Im montierten Zustand stützt sich die Gegenplatte 3 z. B. in an sich bekannter Weise im Gehäuse des Kompressors ab und trägt somit das Ventil 1. Das Ventil 1 ist dabei so montiert, dass sich der Kompressionsraum des Kompressors darstellungsgemäss (Fig. 1) unterhalb der Gegenplatte 3 befindet.

Die Ventilplatte 2 ist in axialer Richtung benachbart zu der Gegenplatte 3, darstellungsgemäss oberhalb dieser, angeordnet. In der Schliessstellung des Ventils 1 liegt die Ventilplatte 2 dichtend auf der Gegenplatte 3 auf und wird durch diese gestützt.

Die Ventilplatte 2 ist bei dem hier beschriebenen Ausführungsbeispiel mittels Biegefedern 11 drehbar und axial beweglich bezüglich des Trägerelements 9 gelagert. Dazu ist die Ventilplatte 2 ringförmig ausgestaltet, das heisst sie hat eine zentrale Öffnung 22 in axialer Richtung. Durch diese zentrale Öffnung 22 erstreckt sich das Trägerelement 9. Das Trägerelement 9 ist über mehrere Biegefedern 11 mit der radial innenliegenden Begrenzungsfläche der Ventilplatte 2 verbunden, wobei die Biegefedern 11 jeweils so angeordnet sind, dass sie in ihrer Ruhelage in radialer Richtung verlaufen. Somit ist die Ventilplatte 2 derart gelagert, dass sie um die Längsachse A des Ventils 1 und relativ zur Gegenplatte 3 drehbar ist.

Befindet sich das Ventil 1 in seiner Schliessstellung, so ist die Ventilplatte 2 bezüglich der Gegenplatte 3 derart orientiert, dass die Bereiche zwischen den Durchlassöffnungen 21 in der Ventilplatte 2 darstellungsgemäss über den Durchlassöffnungen 31 in der Gegenplatte 3 liegen, sodass letztere durch die Ventilplatte 2 abgedeckt werden. Folglich liegt die Ventilplatte 2 dichtend auf der Gegenplatte 3 auf und es existiert keine durchgängige Strömungsverbindung durch das Ventil 1. Zum Öffnen des Ventils 1 wird die Ventilplatte 2 um einen vorgegebenen Winkel, der im wesentlichen durch die Ausdehnung einer Durchlassöffnung 21,31 in Umfangsrichtung festgelegt ist, um die Längsachse A des Ventils 1 gedreht, sodass die Durchlassöffnungen 31,21 in der Gegenplatte 3 und in der Ventilplatte 2 zur Deckung kommen. Nun existiert eine durchgängige Strömungsverbindung.

Besonders vorteilhaft an dieser Ausgestaltung ist, dass das Medium das Ventil praktisch umlenkungsfrei durchströmen kann und somit die Strömungsverluste, insbesondere der Energieverlust des Mediums, erheblich geringer sind als bei bekannten Ventilen.

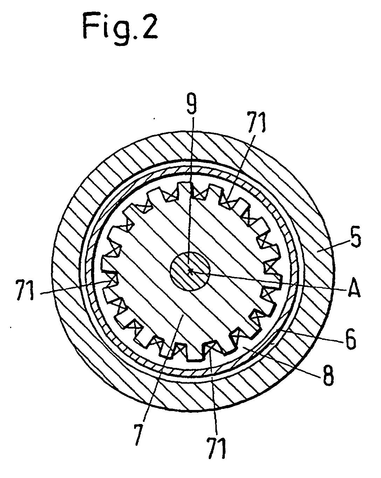

Das erfindungsgemässe aktive Ventil wird mittels einer Antriebsvorrichtung 4 fremdgesteuert. In dem bevorzugten Ausführungsbeispiel ist die Antriebsvorrichtung ein elektrischer Antrieb 4, der von einer nicht dargestellten Steuer- und Versorgungseinheit mit Energie versorgt und angesteuert wird. Die Ansteuerung erfolgt dabei z. B. in Abhängigkeit vom Takt der Kolbenbewegung des Kompressors. Der elektrische Antrieb umfasst in koaxialer Anordnung einen Stator 7 mit Wicklungen 71, einen Läufer 6 und einen Rückschluss 5, deren gemeinsame Achse die Längsachse A des Ventils 1 ist. Zur Verdeutlichung dieser Anordnung zeigt Fig. 2 einen Querschnitt durch das Ausführungsbeispiel entlang der Schnittlinie II-II in Fig. 1. Bei dem hier beschriebenen Ausführungsbeispiel ist der Stator 7 innenliegend angeordnet und auf dem Trägerelement 9 angeordnet. Der Stator 7 wird von einem hülsenförmigen, aussenliegenden Rückschluss 5 für das Magnetfeld umgeben, der ebenfalls auf dem Trägerelement 9 angeordnet ist. In einem Luftspalt 8 zwischen dem Stator 7 und dem Rückschluss 5 ist der Läufer 6 des elektrischen Antriebs 4 angeordnet, der als rohrförmiger Läufer 6 ausgebildet ist. Dadurch ist der Läufer 6 massenarm, sodass bei der Beschleunigung des Läufers 6 nur kleine Trägheitskräfte auftreten. Daraus resultiert der Vorteil, dass das Ventil 1 sehr schnell arbeitet, also innerhalb einer sehr kurzem Zeit geöffnet bzw geschlossen werden kann.

Der rohrförmige Läufer 6 ist an seinem einen Ende (bezüglich der axialen Richtung) unmittelbar und drehfest mit der Ventilplatte 2 verbunden, sodass diese eine axiale Stirnfläche des Läufers 6 bildet. An seinem anderen, darstellungsgemäss (Fig. 1) oberen, axialen Ende weist der Läufer ein ringscheibenförmiges Teil 61 auf, das die zweite axiale Begrenzugsfläche des Läufers 6 bildet und innerhalb des Rückschlusses 5 auf dem Trägerelement 9 gelagert ist. Die Lagerung des ringscheibenförmigen Teils 61 auf dem Trägerelement 9 ist in analoger Weise wie vorne für die Ventilplatte 2 erläutert mittels Biegefedern 11 realisiert, sodass die gesamte Einheit aus Läufer 6 und Ventilplatte 2 drehbar und axial beweglich auf dem Trägerelement 9 gelagert ist.

Vorzugsweise sind die Biegefedem 11 so angeordnet, dass das Ventil 1 geöffnet ist, wenn die Biegefedern in ihrer Ruhe- bzw. Gleichgewichtslage sind. Daraus resultiert der Vorteil, dass das Ventil 1 bei einem Ausfall des elektrischen Antriebs 4 automatisch öffnet und kein unzulässig hoher Druck im Kompressor entsteht.

Erfindungsgemäß weist das Ventil 1 Mittel auf, um die Ventilplatte 2 relativ zur Gegenplatte 3 in axialer Richtung zu bewegen. Beim Öffnen oder Schliessen des Ventils 1 führt die Ventilplatte dann, wie weiter hinten noch erläutert wird, eine kombinierte Hub-Dreh-Bewegung aus, woraus der Vorteil resultiert, dass praktisch kein Verschleiss an der Gegenplatte 3 und der Ventilplatte 2 durch die Betätigung des Ventils 3 auftritt, weil die Drehbewegung reibungsfrei erfolgen kann.

Bei dem hier beschriebenen Ausführungsbeispiel umfassen die Mittel zum Bewegen der Ventilplatte 2 in axialer Richtung einen ringförmigen Hubmagnet 10, der als Elektromagnet ausgebildet ist und ebenfalls von der nicht dargestellten Steuer- und Versorgungseinheit angesteuert wird. Der Hubmagnet 10 ist in der axialen Stirnseite des Rückschlusses 5 angeordnet, sodass er dem ringscheibenförmigen Teil 61 des Läufers 6 gegenüberliegt. Durch Aktivieren des Hubmagneten 10 übt dieser eine axial gerichtete Kraft auf den Läufer 6 und damit auf die Ventilplatte 2 aus, sodass letztere von der Gegenplatte 3 abgehoben wird.

Das bevorzugte Ausführungsbeispiel des Ventils 1 funktioniert wie folgt: Befindet sich das Ventil 1 in seiner Offenstellung, so ist, wie bereits vorne erläutert, die Ventilplatte 2 bezüglich der Gegenplatte 3 derart orientiert, dass die Durchlassöffnungen 31 in der Gegenplatte 3 und die Durchlassöffnungen 21 in der Ventilplatte 2 übereinanderliegen, sodass das Medium das Ventil 1 durchströmen kann. Zum Einleiten der Schliessbewegung aktiviert die Steuer- und Versorgungseinheit zunächst den Hubmagnet 10, der dann den Läufer 6 in axialer Richtung anzieht und somit die mit dem Läufer 6 verbundene Ventilplatte 2 von der Gegenplatte 3 abhebt. Bei dieser Bewegung werden die Biegefedern 11 in die axiale Richtung elastisch deformiert. Die Hubbewegung hat typischerweise nur eine sehr geringfügige Amplitude von beispielsweise 0.1 mm. Sie soll gewährleisten, dass die Ventilplatte 2 von der Grundplatte 3 getrennt wird, damit die anschliessende Drehbewegung gleit- und haftreibungsfrei erfolgen kann. Nachdem die Ventilplatte 2 von der Gegenplatte 3 getrennt ist, steuert die Steuer- und Versorgungseinheit den elektrischen Antrieb 4 derart an, dass der Läufer 6 und damit die Ventilplatte 2 um einen vorgegebenen Winkel um das Trägerelement 9 gedreht wird, wobei der Winkel so bemessen ist, dass sich nach der Rotation die Bereiche zwischen den Durchlassöffnungen 21 in der Ventilplatte 2 über den Durchlassöffnungen 31 in der Gegenplatte 3 befinden. Bei dieser Rotationsbewegung werden die Biegefedern 11 in die Umfangsrichtung elastisch deformiert. Anschliessend wird der Hubmagnet 10 desaktiviert und die Ventilplatte 2 legt sich, unterstützt durch die rückstellende Kraft der Biegefedern 11 in axialer Richtung, auf die Gegenplatte 3, deren Durchlassöffnungen 31 dadurch dichtend abgedeckt werden. Das Ventil 1 ist geschlossen. Zum Öffnen des Ventils 1 wird die Ventilplatte 2 wiederum zunächst in axialer Richtung mittels des Hubmagneten 10 angehoben, dann um den gleichen Winkel wie beim Schliessvorgang, aber in entgegengesetzter Richtung, gedreht und anschliessend in axialer Richtung abgesenkt, sodass sie wieder auf der Gegenplatte 3 aufliegt, jedoch in einer solchen Orientierung, dass die Durchlassöffnungen in der Gegenplatte 3 und in der Ventilplatte 2 übereinanderliegen.

Durch die Ausbildung der Durchlassöffnungen 21,31 als eine Vielzahl radial verlaufender Schlitze ist der Winkel, um den die Ventilplatte 2 zum Öffnen bzw. Schliessen gedreht werden muss, vergleichsweise klein, z. B. kleiner als 45°. Dieser kurze Weg, entlang dem die Ventilplatte 2 bei der Betätigung gedreht wird, wirkt sich ebenfalls positiv auf die Schnelligkeit des Ventils 1, das heisst die zum Öffnen bzw. Schliessen benötigte Zeit, aus.

Bezüglich der prinzipiellen Ausgestaltung des elektrischen Antriebs 4 bzw. bezüglich seines Funktionsprinzips gibt es zahlreiche an sich bekannte Möglichkeiten. So kann der Läufer 6 beispielsweise als Asynchron-Kurzschlussläufer aus leitendem Material geschlitzt oder ungeschlitzt ausgebildet sein, als Synchron- oder Schrittmotorläufer mit Permanentmagneten oder als Reluktanzläufer, der ein ferromagnetisches Material umfasst. Im Hinblick auf eine möglichst massenarme Ausgestaltung wird der Läufer 6 bevorzugt aus einem leichten Material gefertigt. So ist beispiesweise im Falle eines Kurzschlussläufers Aluminium ein bevorzugtes Material. Der elektrische Antrieb 4 kann natürlich auch mit innenliegendem Läufer 6 ausgebildet sein, beispielsweise indem die in Fig. 1 und Fig. 2 dargestellte Anordnung von Stator 7 und Rückschluss 5 vertauscht wird.

Die Ausbildung der Lagerung der Ventilplatte 2 und des Läufers 6 bezüglich des Trägerelements 9 mittels der Biegefedern 11 hat den Vorteil, dass diese Lagerung spielfrei, verschleissfrei, und reibungsfrei, insbesondere gleitreibungsfrei ist. Aus der spielfreien Lagerung resultiert eine hohe Präzision bei der Betätigung des Ventils 1, sodass ein sicherer und zuverlässiger Betrieb gewährleistet ist. Die reibungsfreie und verschleissfreie Lagerung der beweglichen Ventilkomponenten, nämlich des Läufers 6 und der Ventilplatte 2, führt zu einer sehr hohen Lebensdauer. Insbesondere in Verbindung mit der erfindungsgemäßen Ausbildung des Ventils 1, bei der die Ventilplatte 2 eine kombinierte Hub-Dreh-Bewegung ausführt, bei der also die eigentliche Ventilbewegung im wesentlichen auch ohne Reibung zwischen der Ventilplatte 2 und der Gegenplatte 3 erfolgt, ist das aktive Ventil praktisch verschleissfrei.

Die aktive Betätigung des erfindungsgemässen Ventils 1 ermöglicht es, die Öffnungs- und Schliesszeitpunkte jeweils optimal und insbesondere unabhängig von dem durch das Medium ausgeübten Druck einzustellen. Dies hat den Vorteil, dass deutlich geringere Energieverluste auftreten, wodurch sich der Wirkungsgrad des Ventils 1 verbessert. Ferner lässt sich die Leistung des Kompressors in sehr einfacher Weise regeln. So ist es beispielsweise durch die Fremdsteuerung möglich, das Druckventil während eines oder mehrerer Arbeitszyklen ständig offen zu lassen, um so in einfacher Weise die Förderleistung des Kompressors je nach Bedarf zu reduzieren. Wird z. B. das Druckventil während jedem vierten Arbeitszyklus in der Offenstellung belassen, so wird die Leistung des Kompressors um etwa 25% reduziert.

Insbesondere die Ausgestaltung des Ventils 1 mit dem elektrischen Antrieb 4, der einen massenarmen, speziell einen rohrförmigen, Läufer 6 aufweist, führt zu einem sehr schnellen Ventil, das heisst die Freigabe bzw. Blockierung des Strömungsquerschnitts durch das Ventil 1 kann in sehr kurzer Zeit erfolgen, weil die bei der Betätigung zu bewegenden Massen gering sind und somit nur kleine Trägheitskräfte auftreten. Dies ist insbesondere im Hinblick auf sehr leistungsfähige Kompressoren ein grosser Vorteil, weil bei bekannten Ventilen die Öffnungs- und Schliesszeiten häufig einen wesentlichen Faktor darstellen, der die maximal erreichbare Arbeitsgeschwindigkeit (Kolbengeschwindigkeit) des Kompressors begrenzt.

Als Alternative zu der Ausführung mit dem Hubmagneten 10 können die Mittel zum Bewegen der Ventilplatte 2 in axialer Richtung auch in den elektrischen Antrieb integriert werden. Der elektrische Antrieb 4 ist dann derart ausgestaltet, beispielsweise durch eine entsprechende Anordnung und Ansteuerung der Wicklungen 71 des Stators 7, dass er zusätzlich zu dem Drehmoment eine axial gerichtete Kraft auf den Läufer 6 bzw. die mit ihm verbundenen Ventilplatte 2 ausüben kann.

Natürlich können die Biegefedern 11 auch anders ausgestaltet sein, z. B. derart, dass sie sich in der Ruhelage spiralförmig zwischen dem Läufer 6 bzw. der Ventilplatte 2 und dem Trägerelement 9 erstrecken.

Anstelle der Lagerung des Läufers 6 und der Ventilplatte 2 mittels der Biegefedern 11 ist es auch möglich, den Läufer 6 magnetisch und berührungsfrei bezüglich des Trägerelements 9 zu lagern. Die Lagerung der Einheit aus dem Läufer 6 und der Ventilplatte 2 erfolgt dann mittels an sich bekannter Magnetlager, z. B. mittels Radiallagern, die den Läufer 6 bezüglich der Längsachse A des Ventils zentriert halten. Es ist ferner möglich, die Mitttel für die magnetische Lagerung in den elektrischen Antrieb 4 zu integrieren, beispielsweise durch eine entsprechende Ausgestaltung und Anordnung der Wicklungen 71 des Stators 7, sodass der elektrische Antrieb sowohl ein Drehmoment auf den Läufer 6 ausüben kann als auch den Läufer magnetisch und berührungsfrei bezüglich der Längsachse A des Ventils zentriert lagert.

Auch die berührungsfreie magnetische Lagerung des Läufers 6 bezüglich des Trägerelements 9 bringt den bereits erwähnten Vorteil mit sich, dass sie reibungs- und verschleissfrei ist. Bei Ausgestaltungen mit einer magnetischen Lagerung des Läufers 6 bzw. der Ventilplatte 2 ist es auch möglich, die Ventilplatte 2 beim Öffnen und beim Schliessen des Ventils 1 jeweils in die gleiche Richtung zu drehen.

Es versteht sich, dass bei dem erfindungsgemässen Ventil 1 zusätzlich eine Dämpferplatte zwischen der Ventilplatte 2 und der Gegenplatte 3 vorgesehen sein kann, z. B. in sinngemäss gleicher Weise wie dies von konventionellen Plattenventilen bekannt ist.

Das erfindungsgemässe Ventil 1 zeichnet sich inbesondere dadurch aus, dass kein Prellen und kein Flattern der Ventilplatte 2 auftritt, wodurch einer Materialermüdung entgegengewirkt wird, sodass das Ventil 1 im Betriebszustand eine sehr hohe Lebensdauer aufweist. Das erfindungsgemässe Ventil ermöglicht eine ausgezeichnete Ventilkinematik mit kurzen Öffnungs- und Schliesszeiten sowie mit optimal einstellbaren Öffnungs- und Schliesszeitpunkten. Ferner kann das erfindungsgemässe Ventil praktisch verschleissfrei ausgestaltet werden.

## Patentansprüche

1. Aktiv gesteuertes Ventil für einen Kolbenkompressor, umfassend eine Ventilplatte (2) und eine Gegenplatte (3), welche beide Durchlassöffnungen (21,31) aufweisen, wobei die Ventilplatte (2) derart gelagert ist, dass sie um die Längsachse (A) des Ventils und relativ zur Gegenplatte (3) drehbar ist, und umfassend eine Antriebsvorrichtung (4) zum Antrieb der Ventilplatte (2), um diese relativ zur Gegenplatte (3) zu drehen, **dadurch gekennzeichnet, dass** zusätzlich ein Mittel vorgesehen ist, um die Ventilplatte (2) relativ zur Gegenplatte (3) auch in Richtung der Längsachse (A) zu bewegen.

2. Ventil nach Anspruch 1, bei welchem die Antriebsvorrichtung ein elektrischer Antrieb (4) mit einem Stator (7) und einem Läufer (6) ist, wobei der Läufer (6) drehfest mit der Ventilplatte (2) verbunden ist.

3. Ventil nach Anspruch 2, bei welchem der Läufer (6) als massenarmer Läufer (6), insbesondere als rohrförmiger Läufer (6), ausgestaltet ist.

4. Ventil nach einem der vorangehenden Ansprüche, **dadurch gekennzeichnet, dass** der Hub in Richtung der Längsachse (A) 0.1 mm beträgt.

5. Ventil nach einem der vorhergehenden Ansprüche, bei welchem das Mittel zum Bewegen der Ventilplatte (2) in Längsrichtung (A) einen Hubmagnet (10) umfasst, der so angeordnet ist, dass er eine axial gerichtete Kraft auf die Ventilplatte (2) und/oder den Läufer (6) ausüben kann.

6. Ventil nach einem der Ansprüche 2 bis 5, bei welchem das Mittel zum Bewegen der Ventilplatte (2) in Längsrichtung (A) in den elektrischen Antrieb (4) integriert und letzterer somit derart ausgestaltet ist, dass er eine axial gerichtete Kraft auf den Läufer (6) ausüben kann.

7. Ventil nach einem der vorhergehenden Ansprüche, **dadurch gekennzeichnet, dass** die Antriebsvorrichtung (4) und das Mittel zum Bewegen der Ventilplatte (2) in Richtung der Längsachse (A) derart ansteuerbar sind, dass die Ventilplatte (2) zum Öffnen und/oder Schliessen des Ventils (1) eine kombinierte Hub-Dreh-Bewegung ausführt.

8. Ventil nach einem der Ansprüche 2-7, wobei die Gegenplatte (3), die Ventilplatte (2) und der Läufer (6) entlang eines sich in axialer Richtung erstreckenden Trägerelements (9) angeordnet sind, wobei die Lagerung der Ventilplatte (2) und des Läufers (6) bezüglich des Trägerelements (9) verschleissfrei, insbesondere reibungsfrei, ausgestaltet ist.

9. Ventil nach Anspruch 8, bei welchem der Läufer (6) magnetisch und berührungsfrei bezüglich des Trägerelements (9) gelagert ist.

10. Ventil nach Anspruch 8, bei welchem die Ventilplatte (2) und der Läufer (6) mittels Biegefedern (11) mit dem Trägerelement (9) verbunden sind.

11. Ventil nach Anspruch 10, **dadurch gekennzeichnet, dass** die Biegefedern (11) derart angeordnet sind, dass sich diese bei geöffnetem Ventil (1) in Ruhelage befinden.

12. Ventil nach einem der vorhergehenden Ansprüche, ausgestaltet als ein Druckventil oder ein Saugventil.

13. Ventil nach einem der vorhergehenden Ansprüche, **dadurch gekennzeichnet, dass** die Durchlassöffnungen (21,31) als radial verlaufende Schlitze ausgebildet sind, die in Umfangsrichtung äquidistant über die Ventilplatte (2) beziehungsweise die Gegenplatte (3) verteilt angeordnet sind.

14. Ventil nach Anspruch 13, **dadurch gekennzeichnet, dass** die Abmessungen der Schlitze und ihr gegenseitiger Abstand auf der Ventilplatte (2) gleich sind wie auf der Gegenplatte (3).

15. Ventil nach Anspruch 13 oder 14, **dadurch gekennzeichnet, dass** die Abmessung der Schlitze derart ausgestaltet ist, dass ein Drehwinkel zwischen Ventilplatte (2) und Gegenplatte (3) von weniger als 45 ° erforderlich ist, um die Durchlassöffnungen (21,31) zu öffnen bzw.zu schliessen.

16. Ventil nach einem der vorhergehenden Ansprüche, **dadurch gekennzeichnet, dass** zwischen der Ventilplatte, (2) und der Gegenplatte (3) eine Dämpferplatte angeordnet ist.

17. Kolbenkompressor mit einem Ventil (1 ), das gemäss einem der vorangehenden Ansprüche ausgestaltet ist.

18. Verfahren zum fremdgesteuerten Betätigen eines Kolbenkompressorventils (1) durch einen eigenen Antriebsmechanismus, wobei das Ventil (1) eine Ventilplatte (2) und eine Gegenplatte (3) umfasst, und wobei die Ventilplatte (2) derart gelagert ist, dass diese um die Längsachse (A) des Ventils und relativ zur Gegenplatte (3) drehbar und antreibbar ist, und wobei die Ventilplatte (2) und die Gegenplatte (3) derart alternierend zwischen zwei Zuständen, einer Schliessstellung und einer Offenstellung gedreht werden, dass sich das Ventil (1) entweder in einer Schliessstellung befindet, indem die Durchlassöffnungen (31) der Gegenplatte (3) durch die Ventilplatte (2) verschlossen sind, oder dass sich das Ventil (1) in einer Offenstellung befindet, indem die Ventilplatte (2) derart über der Gegenplatte (3) liegt, dass sich ein durchgängiger Strömungsquerschnitt ergibt, **dadurch gekennzeichnet, dass** die Ventilplatte (2) beim Öffnen und Schliessen des Ventils (1) auch in Richtung der Längsachse (A) bewegt wird, und dabei eine kombinierte Hub-Drehbewegung ausführt.

19. Verfahren nach Anspruch 18, **dadurch gekennzeichnet, dass** vor der Drehbewegung die Hubbewegung ausgeführt wird, indem die Ventilplatte (2) in Längsachse (A) bewegt wird und dadurch von der Grundplatte (3) abgehoben wird.

20. Verfahren nach Anspruch 18 oder 19, **dadurch gekennzeichnet, dass** die Ventilplatte (2) beim Öffnen und beim Schliessen des Ventils (1) jeweils in die gleiche Richtung gedreht wird.

21. Verfahren nach einem der Ansprüche 18 bis 20, **dadurch gekennzeichnet, dass** die Ventilplatte (2) durch eine Drehung von weniger als 45° von der Schliessstellung in die Offenstellung oder von der Offenstellung in die Schliessstellung gebracht wird.

22. Verfahren zum Ansteuern der Förderleistung eines Kolbenkompressors mit einem nach Anspruch 18 bis 21 angesteuerten Ventil.

23. Verfahren nach Anspruch 22, **dadurch gekennzeichnet, dass** das Ventil (1) während eines oder mehreren Arbeitszyklen des Kolbenkompressors ständig in Offenstellung gelassen wird.

24. Verfahren nach Anspruch 22 oder 23, **dadurch gekennzeichnet, dass** der öffnungszeitpunkt und der Schliesszeitpunkt des Ventils (1) unabhängig vom Druck des Mediums angesteuert wird.

25. Kolbenkompressor mit einem Ventil (1), das gemäss einem der Ansprüche 1-16 ausgestaltet ist, betrieben mit einem Verfahren gemäss einem der Ansprüche 22 bis 24.

## Claims

1. Actively controlled valve for a piston compressor comprising a valve plate (2) and a counter-plate (3), each of which has passage openings (21, 31), the valve plate (2) being journalled in such a manner that it is rotatable about the longitudinal axis (A) of the valve and relative to the counter-plate (3); and comprising a drive device (4) to drive the valve plate (2) in order to rotate the latter relative to the counter-plate (3), **characterised by** additional means to move the valve plate (2) relative to the counter-plate (3) also in direction of the longitudinal axis (A).

2. Valve in accordance with claim 1 in which the drive device is an electric drive (4) with a stator (7) and a rotor (6), with the rotor (6) being rotationally fixedly connected to the valve plate (2).

3. Valve in accordance with claim 2 in which the rotor (6) is designed as a mass-poor rotor (6), in particular as a tubular rotor (6).

4. Valve in accordance with one of the preceding claims, **characterised in that** the stroke in direction of the longitudinal axis (A) is 0.1mm.

5. Valve in accordance with one of the proceeding claims in which the means for moving the valve plate (2) in longitudinal direction (A) comprise a lifting magnet (10) which is arranged in such a manner that it can exert an axially directed force on the valve plate (2) and/or on the rotor (6).

6. Valve in accordance with one of claims 2 to 5 in which the means to move the valve plate (2) in longitudinal direction (A) are integrated into the electric drive (4), and the electric drive (4) being designed in such a manner that it can exert an axially directed force on the rotor (6).

7. Valve in accordance with one of the proceeding claims **characterised in that** the drive device (4) and the means to move the valve plate (2) in direction of the longitudinal axis (A) are controlled such, that the valve plate (2) executes a combined lifting-rotational movement for the opening and/or the closing of the valve (1).

8. Valve in accordance with one of the claims 2 to 7 with the counter-plate (3), the valve plate (2) and the rotor (6) being arranged along a carrier element (9) which extends in the axial direction, with the journalling of the valve plate (2) and of the rotor (6) being designed to be abrasion-free, in particular frictionless, with respect to the carrier element (9).

9. Valve in accordance with claim 8 in which the rotor (6) is journalled magnetically and without contact with respect to the carrier element (9).

10. Valve in accordance with claim 8 in which the valve plate (2) and the rotor (6) are connected to the carrier element (9) by means of bending springs (11).

11. Valve in accordance with claim 10, **characterised in that** the bending springs (11) are arranged such that they are in rest position when the valve (1) is open.

12. Valve in accordance with one of the proceeding claims, built as a pressure valve or a suction valve.

13. Valve in accordance with one of the proceeding claims, **characterised in that** the passage openings (21,31) are formed as radially extending slits, which in the peripheral direction are equidistantly distributed along the valve plate (2) and the counter-plate (3) respectively.

14. Valve in accordance with claim 13, **characterised in that** the valve plate 2 and the counter-plate 3 have the same dimension regarding the slits and the mutual spacing of the slits.

15. Valve in accordance with claim 13 or 14, **characterised in that** the design of the slits is such, that an angle of rotation of less than 45° is required between the valve plate (2) and the counter-plate (3) to open or close the passage openings (21,31).

16. Valve in accordance with one of the proceeding claims, **characterised in that** a damper plate is provided between the valve plate (2) and the counter-plate (3).

17. Piston compressor comprising a valve (1) which is designed in accordance with one of the preceding claims.

18. Method for the external control of a valve of a piston compressor (1) through a drive mechanism of their own, whereas the valve (1) comprises a valve plate (2) and a counter-plate (3), and whereas the valve plate (2) is jounalled in such a manner that it is rotatable and driveable about the longitudinal axis (A) of the valve and relative to the counter-plate (3), and whereas the valve plate (2) and the counter-plate (3) are alternatively moved between two states, an open position and a closed position such, that the valve (1) is either in a closed position, inthat the passage openings (31) of the counter-plate (3) are closed by the valve plate (2), or in that the valve (1) is in an open position, inthat the valve plate (2) is arranged such with respect to the counter-plate (3), that a through-going flow cross-section for the medium arises, **characterised in that** during opening and closing the valve plate (2) of the valve (1) is also moved in direction of the longitudinal axis (A), so it executes a combined lifting and rotating movement.

19. Method in accordance with claim 18, **characterised in that** the lifting movement is executed prior to the rotating movement, **in that** the valve plate (2) is moved in direction to the longitudinal axis (A), and thereby separated from the counter-plate (3).

20. Method in accordance with claim 18 or 19, **characterised in that** during opening and closing of the valve (1) the valve plate (2) is rotated in the same direction.

21. Method in accordance with one of claims 18 to 20, **characterised in that** by a rotation of less than 45°, the valve plate (2) is moved from the closed position to the open position or from the open position to the closed position.

22. Method to control the throughput capacity of a piston compressor comprising a valve controlled according to one of claims 18 to 21.

23. Method in accordance with claim 22, **characterised in that** during one or more operating strokes of the piston compressor the valve (1) is held in an open position.

24. Method in accordance with claims 22 or 23, **characterised in that** the time to open and the time to close the valve (1) is controlled independent of the pressure of the medium.

25. Piston compressor comprising a valve (1) according to one of claims 1 to 16, and operated with a method according to one of claims 22 to 24.

## Revendications

1. Vanne commandée activement pour un compresseur à piston, comprenant une plaque de vanne (2) et une contre-plaque (3), qui présentent toutes les deux des ouvertures traversantes (21, 31), où la plaque de vanne (2) est logée de façon à pouvoir tourner autour de l'axe longitudinal (A) de la vanne et relativement à la contre-plaque (3), et comprenant un dispositif d'entraînement (4) pour entraîner la plaque de vanne (2) afin de faire tourner celle-ci relativement à la contre-plaque (3), **caractérisée en ce qu'**il est prévu additionnellement un moyen pour déplacer la plaque de vanne (2) relativement à la contre-plaque (3) également dans la direction de l'axe longitudinal (A).

2. Vanne selon la revendication 1, où le dispositif d'entraînement est un entraînement électrique (4) avec un stator (7) et un rotor (6), où le rotor (6) est relié d'une manière non tournante à la plaque de vanne (2).

3. Vanne selon la revendication 2, où le rotor (6) est réalisé comme rotor (6) pauvre en masse, en particulier comme rotor tubulaire (6).

4. Vanne selon l'une des revendications précédentes, **caractérisée en ce que** la course en direction de l'axe longitudinal (A) est de 0,1 mm.

5. Vanne selon l'une des revendications précédentes, où le moyen de déplacement de la plaque de vanne (2) dans la direction longitudinale (A) comprend un aimant de levage (10) qui est disposé de façon qu'il puisse exercer une force dirigée axialement sur la plaque de vanne (2) et/ou le rotor (6).

6. Vanne selon l'une des revendications 2 à 5, où le moyen de déplacement de la plaque de vanne (2) dans la direction longitudinale (A) est intégré dans l'entraînement électrique (4) et que ce dernier est donc réalisé de façon qu'il puisse exercer une force dirigée axialement sur le rotor (6).

7. Vanne selon l'une des revendications précédentes, **caractérisée en ce que** le dispositif d'entraînement (4) et le moyen de déplacement de la plaque de vanne (2) peuvent être commandés en direction de l'axe longitudinal (A) de façon que la plaque de vanne (2), pour ouvrir et/ou fermer la vanne (1), exécute un mouvement de levage et de rotation combiné.

8. Vanne selon l'une des revendications 2 à 7, où la contre-plaque (3), la plaque de vanne (2) et le rotor (6) sont disposés le long d'un élément de support (9) s'étendant dans la direction axiale, où le logement de la plaque de vanne (2) et du rotor (6) par rapport à l'élément de support (9) est réalisé sans usure, en particulier sans frottement.

9. Vanne selon la revendication 8, où le rotor (6) est logé de manière magnétique et sans contact relativement à l'élément de support (9).

10. Vanne selon la revendication 8, où la plaque de vanne (2) et le rotor (6) sont reliés par des ressorts de flexion (11) à l'élément de support (9).

11. Vanne selon la revendication 10, **caractérisée en ce que** les ressorts de flexion (11) sont disposés de façon que ceux-ci, lorsque la vanne (1) est ouverte, se trouvent en position de repos.

12. Vanne selon l'une des revendications précédentes, réalisée comme une vanne de pression ou une vanne d'aspiration.

13. Vanne selon l'une des revendications précédentes, **caractérisée en ce que** les ouvertures traversantes (21, 31) sont réalisées comme des fentes s'étendant radialement, qui sont réparties dans la direction périphérique d'une manière équidistante sur la plaque de vanne (2) respectivement la contre-plaque (3).

14. Vanne selon la revendication 13, **caractérisée en ce que** les dimensions des fentes et leur écart mutuel sur la plaque de vanne (2) sont identiques à ceux de la contre-plaque (3).

15. Vanne selon la revendication. 13 ou 14, **caractérisée en ce que** la dimension des fentes est réalisée de façon qu'un angle de rotation entre la plaque de vanne (2) et la contre-plaque (3) inférieur à 45° est requis pour ouvrir respectivement fermer les ouvertures traversantes (21, 31).

16. Vanne selon l'une des revendications précédentes, **caractérisée en ce qu'**une plaque d'amortissement est disposée entre la plaque de vanne (2) et la contre-plaque (3).

17. Compresseur à piston avec une vanne (1) qui est réalisée selon l'une des revendications précédentes.

18. Procédé pour l'actionnement piloté d'une vanne de compresseur à piston (1) par un mécanisme d'entraînement propre, où la vanne (1) comprend une plaque de vanne (2) et une contre-plaque (3), et où la plaque de vanne (2) est logée de façon que celle-ci puisse tourner et être entraînée autour de l'axe longitudinal (A) de la vanne et relativement à la contre-plaque (3), et où la plaque de vanne (2) et la contre-plaque (3) sont tournées selon une telle alternance entre deux états, une position de fermeture et une position d'ouverture, que la vanne (1) se trouve soit dans une position de fermeture, dans laquelle les ouvertures traversantes (31) de la contre-plaque (3) sont fermées par la plaque de vanne (2), ou que la vanne (1) se trouve dans une position d'ouverture, dans laquelle la plaque de vanne (2) se situe de telle sorte au-dessus de la contre-plaque (3) qu'il se produit une section transversale d'écoulement traversante, **caractérisé en ce que** la plaque de vanne (2), lors de l'ouverture et de la fermeture de la vanne (1), est également déplacée en direction de l'axe longitudinal (A) et, ce faisant, exécute un mouvement de levage et de rotation combiné.

19. Procédé selon la revendication 18, **caractérisé en ce qu'**avant le mouvement de rotation, le mouvement de levage est exécuté, **en ce que** la plaque de vanne (2) est déplacée selon l'axe longitudinal (A) et est relevée de ce fait de la plaque de base (3).

20. Procédé selon la revendication 18 ou 19, **caractérisé en ce que** la plaque de vanne (2), lors de l'ouverture et de la fermeture de la vanne (1), est tournée respectivement dans la même direction.

21. Procédé selon l'une des revendications 18 à 20, **caractérisé en ce que** la plaque de vanne (2) est amenée par une rotation inférieure à 45° de la position de fermeture dans la position d'ouverture ou bien de la position d'ouverture dans la position de fermeture.

22. Procédé de commande du débit d'un compresseur à piston avec une vanne commandée selon l'une des revendications 18 à 21.

23. Procédé selon la revendication 22, **caractérisé en ce que** la vanne (1), pendant un ou plusieurs cycles de travail du compresseur à piston, reste en permanence dans la position d'ouverture.

24. Procédé selon la revendication 22 ou 23, **caractérisé en ce que** l'instant d'ouverture et l'instant de fermeture de la vanne (1) sont commandés indépendamment de la pression du milieu.

25. Compresseur à piston avec une vanne (1), qui est réalisée selon l'une des revendications 1 à 16, amenée à fonctionner avec un procédé selon l'une des revendications 22 à 24.
